# EUROPEAN PATENT APPLICATION

(11) **EP 4 546 904 A1**
(43) Date of publication of application: **30.04.2025**
(21) Application number: 23852171.0
(22) Date of filing: 13.04.2023
(51) Int. Cl.: H04W 60/06, H04W 28/02

(54) **WIRELESS COMMUNICATION SYSTEM, WIRELESS COMMUNICATION METHOD, AND PROGRAM**

(30) Priority: 08.08.2022 JP 2022126520
(71) Applicant: JVCKenwood Corporation, Yokohama-shi, Kanagawa 2210022 (JP)
(72) Inventor: TAKEYA, Kazuki, Yokohama-shi, Kanagawa 221-0022 (JP)
(74) Representative: Wimmer, Hubert
(86) International application number: PCT/JP2023/015018
(87) International publication number: WO 2024/034185

(57) **Abstract**

Provided are a wireless communication system, a wireless communication method, and a program capable of allowing the wireless terminal to make outgoing and incoming calls even if congestion occurs. The wireless communication system according to the present disclosure is a wireless communication system that includes a base station, a management device, and a wireless terminal. The base station includes a determination unit that determines that the base station is in a congestion state when the number of wireless terminals each having sent a location registration request that is received by the base station within a predetermined period of time exceeds a predetermined number, and a notification unit that transmits, when the determination unit determines that the base station is in the congestion state, a congestion occurrence notification to the wireless terminal and the management device, and the wireless terminal includes a stopping unit that stops the location registration request when the wireless terminal receives the congestion occurrence notification, and that sets a setting of the wireless terminal to be within service range that is available for outgoing and incoming calls.

## Description

### Field

The present disclosure relates to a wireless communication system, a wireless communication method, and a program.

### Background

If congestion occurs in a base station due to concentration of location registration requests received from wireless terminals, it is difficult to make outgoing and incoming calls by the wireless terminals that are located in an area that is covered by the corresponding base station and in which outgoing and incoming calls are available. For example, the location registration requests sent from a wireless terminal to the base station are concentrated when a power supply of the base station is turned on or when the wireless terminal moves out from the base station.

In order to prevent such congestion in the base station, in Patent Literature 1, there is a proposed method of allowing the wireless terminals to perform location registration by increasing or decreasing a transmission output little by little as a result of the base station being synchronized with the peripheral base station.

### Citation List

### Patent Literature

Patent Literature 1: Japanese Laid-open Patent Publication No. 2020-123909

### Summary

However, with the conventional method described above in Patent Literature 1, the number of occurrences of congestion is reduced, but, in a case where wireless terminals are present in a specific area in a concentrated manner, the possibility of congestion still remains, and, if congestion has occurred, it is still difficult to make outgoing and incoming calls in the base station that is being congested.

Accordingly, one aspect of an embodiment of the present disclosure has been conceived in light of the circumstances described above and an object thereof is to provide a wireless communication system, a wireless communication method, and a program that enables wireless terminals to make outgoing and incoming calls even if location registration requests sent from the wireless terminals are concentrated.

### Solution to Problem

wireless communication system apparatus according to the present disclosure comprising: a base station; a wireless terminal; and a management device, wherein the base station includes a determination unit that determines that the base station is in a congestion state when the number of wireless terminals each having sent a location registration request that is received by the base station within a predetermined period of time exceeds a predetermined number, and a notification unit that transmits, when the determination unit determines that the base station is in the congestion state, a congestion occurrence notification to the wireless terminal and the management device, and the wireless terminal includes a stopping unit that stops the location registration request when the wireless terminal receives the congestion occurrence notification, and that sets a setting of the wireless terminal to be within service range that is available for outgoing and incoming calls.

A wireless communication method apparatus according to the present disclosure comprising: a step of determining, performed by a base station, that the base station is in a congestion state when the number of wireless terminals each having sent a location registration request that is received by the base station within a predetermined period of time exceeds a predetermined number; a step of transmitting, performed by the base station, a congestion occurrence notification to the wireless terminal and a management device when it is determined by the base station that the base station is in the congestion state; and a step of stopping, performed by the wireless terminal, the location registration request when the wireless terminal receives the congestion occurrence notification, and setting, performed by the wireless terminal, a setting of the wireless terminal to be within service range that is available for outgoing and incoming calls.

A program that causes a computer to execute a process apparatus according to the present disclosure comprising: a step of determining, performed by a base station, that the base station is in a congestion state when the number of wireless terminals each having sent a location registration request that is received by the base station within a predetermined period of time exceeds a predetermined number; a step of transmitting, performed by the base station, a congestion occurrence notification to the wireless terminal and a management device when it is determined by the base station that the base station is in the congestion state; and a step of stopping, performed by the wireless terminal, the location registration request when the wireless terminal receives the congestion occurrence notification, and setting, performed by the wireless terminal, a setting of the wireless terminal to be within service range that is available for outgoing and incoming calls.

According to the present disclosure, it is possible to provide a wireless communication system, a wireless communication method, and a program that enables wireless terminals to make outgoing and incoming calls even if location registration requests sent from the wireless terminals are concentrated.

### Brief Description of Drawings

FIG. 1 is a schematic diagram illustrating one example of the overall configuration of a wireless communication system according to the present disclosure.
FIG. 2 is a diagram illustrating an example of a configuration of a base station according to the present disclosure.
FIG. 3 is a diagram illustrating an example of a configuration of a wireless terminal according to the present disclosure.
FIG. 4 is a diagram illustrating an example of a configuration of a management device according to the present disclosure.
FIG. 5 is a diagram illustrating one example of information stored in a base station storage unit according to the present disclosure.
FIG. 6 is a diagram illustrating one example of information stored in a registration information storage unit according to the present disclosure.
FIG. 7 is a diagram illustrating one example of information stored in a congestion state storage unit according to the present disclosure.
FIG. 8 is a flowchart illustrating the flow of a location registration process performed by the wireless terminal according to the present disclosure.
FIG. 9 is a flowchart illustrating the flow of the location registration process performed by the base station according to the present disclosure.
FIG. 10 is a flowchart illustrating the flow of the location registration process performed by the management device according to the present disclosure.
FIG. 11 is a flowchart illustrating the flow of a congestion detection process performed by the base station according to the present disclosure.
FIG. 12 is a flowchart illustrating the flow of a congestion state notification according to the present disclosure.
FIG. 13 is a flowchart illustrating the flow of an outgoing call request process performed by the management device according to the present disclosure.
FIG. 14 is a flowchart illustrating the flow of the congestion resolution process performed by the base station according to the present disclosure.

### Description of Embodiments

Preferred embodiments disclosed in the present disclosure will be described in detail below with reference to the accompanying drawings. Furthermore, the present disclosure is not limited to the embodiments described below.

### (Configuration of wireless communication system)

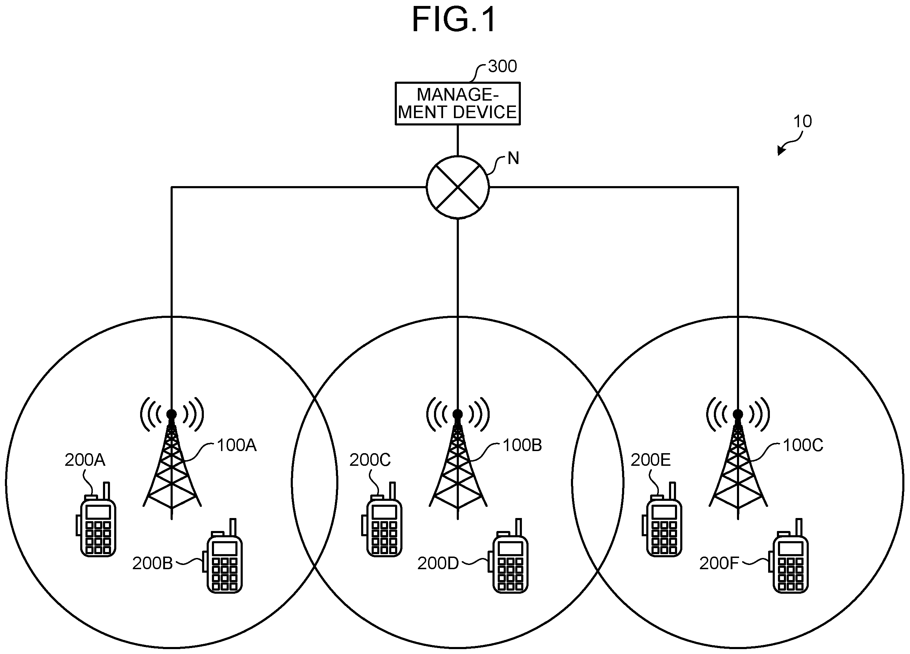

First, a wireless communication system 10 according to the present disclosure will be described with reference to FIG. 1. FIG. 1 is a schematic diagram illustrating one example of the overall configuration of a wireless communication system according to the present disclosure. As illustrated in FIG. 1, the wireless communication system 10 includes a plurality of base stations 100 (100A, 100B, and 100C), a management device 300 that manages these base stations 100, a plurality of wireless terminals 200 (200A, 200B, 200C, 200D, 200E, and 200F) that are present in respective radio wave areas covered by the respective base stations 100, and an IP (Internet Protocol) network N that allows for transmission and reception of information between each of the base stations 100 and the management device 300.

Furthermore, FIG. 1 illustrates the single piece of the management device 300 that manages the plurality of base stations 100, but a plurality of the management devices 300 may be present constituted by a configuration such that a single piece of the base station 100 is paired with a single piece of the management device 300. Furthermore, the base station 100 may be integrated with the management device 300.

### (Configuration of base station)

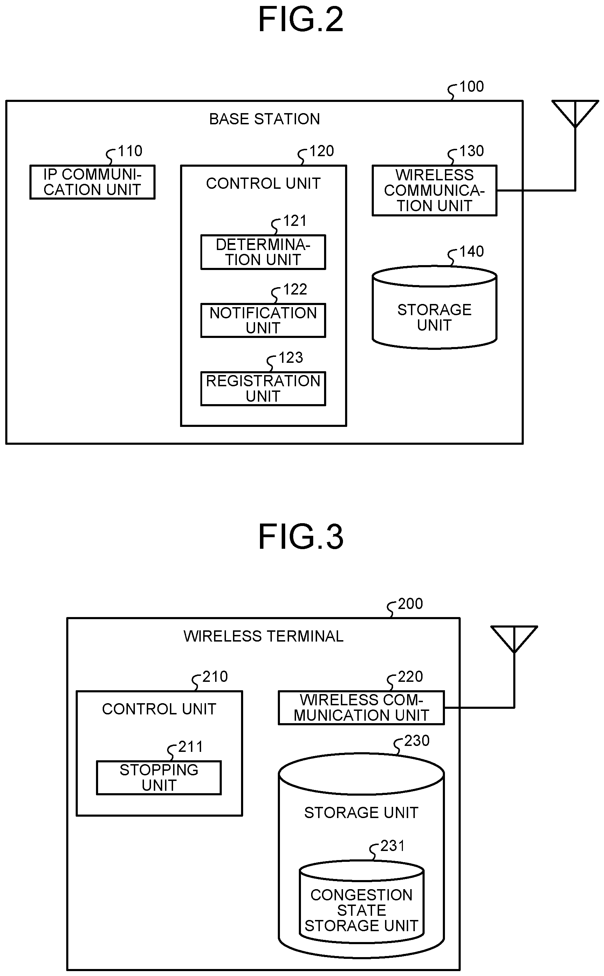

In the following, a configuration of the base station 100 according to the present disclosure will be described with reference to FIG. 2. FIG. 2 is a diagram illustrating an example of the configuration of the base station according to the present disclosure.

A IP communication unit 110 performs communication via the IP network N, and sends and receives information to and from another device. The IP communication unit 110 may be implemented by, for example, a network interface circuit including a local area network (LAN) port, of a wireless local area network (LAN) card.

A control unit 120 controls each of the units included in the base station 100, performs a process based on a request received from an outside of the base station 100, and outputs the request or the result to the outside as needed. The control unit 120 is implemented by causing a central processing unit (CPU), a micro processing unit (MPU), or the like to execute various programs stored in a storage unit 140 by using a RAM as a work area. Furthermore, the control unit 120 may be implemented by an integrated circuit, such as an application specific integrated circuit (ASIC) or a field programmable gate array (FPGA).

As illustrated in FIG. 2, the control unit 120 includes a determination unit 121, a notification unit 122, and a registration unit 123. The control unit 120 implements the determination unit 121 and the notification unit 122 by reading a programs (software) from the storage unit 140 and executing the programs (software). Furthermore, the control unit 120 may perform these processes by a single CPU, or may include a plurality of CPUs and perform these processes by the plurality of CPUs in parallel.

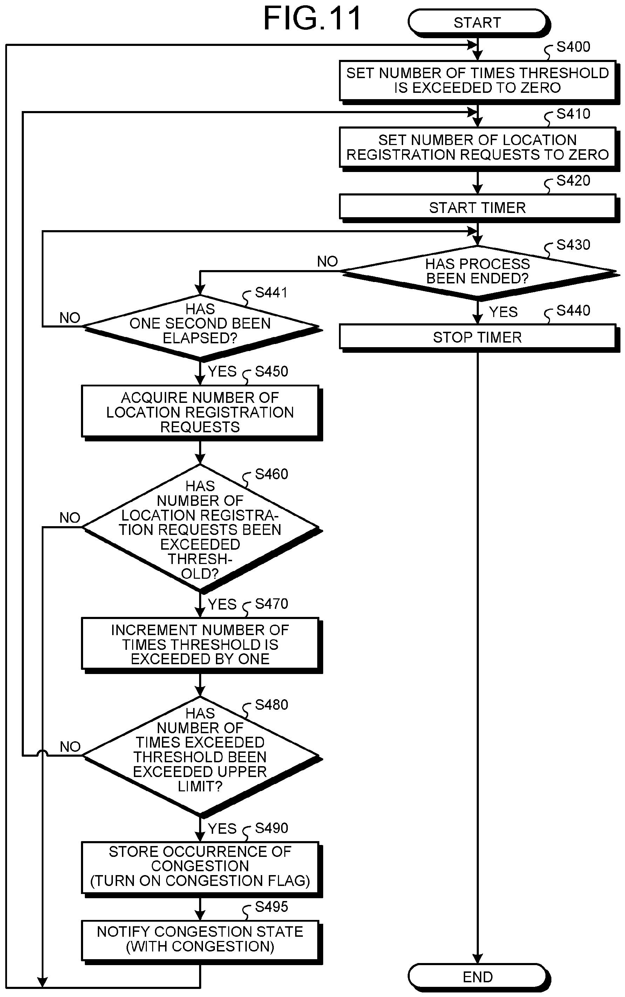

In a case where that the number of wireless terminals 200 each having sent a location registration request that is received by the base station 100 within a predetermined period of time exceeds a predetermined number, the determination unit 121 determines that the base station 100 is in a congestion state (with congestion). In other words, when the determination unit 121 counts the number of wireless terminals 200 each having sent the location registration request that is received by the base station 100 in, for example, one second as a predetermined period of time, if the number of location registration requests exceeds, for example, 100, the determination unit 121 may determine that the base station 100 is a congestion state. In this way, the determination unit 121 counts the number of location registration requests that have been sent from the wireless terminals 200 and that are received by the base station 100 within a predetermined period of time, and, if the counted number exceeds the predetermined number, the determination unit 121 determines that this state is a state with congestion. Furthermore, the processes performed by the determination unit 121 are indicated at Steps S420, S430, S441, S450, S460, S470, S480, and S490 by using the flowchart illustrated in FIG. 11 that will be described later; therefore, descriptions of the processes will be described in detail with reference to FIG. 11.

In a case where the determination unit 121 determines that the base station 100 is in the congestion state, the notification unit 122 transmits a congestion occurrence notification to the wireless terminal 200 and the management device 300. Here, the congestion occurrence notification is information that is transmitted from the base station 100 to the wireless terminal 200 and the management device 300, and includes information related to a base station number for identifying the base station 100 in which congestion has occurred and related to a congestion state indicating whether the state is a state with congestion or a state without congestion. Furthermore, the processes performed by the notification unit 122 are indicated at Step S495 by using the flowchart illustrated in FIG. 11 that will be described later; therefore, descriptions of the processes will be described in detail with reference to FIG. 11.

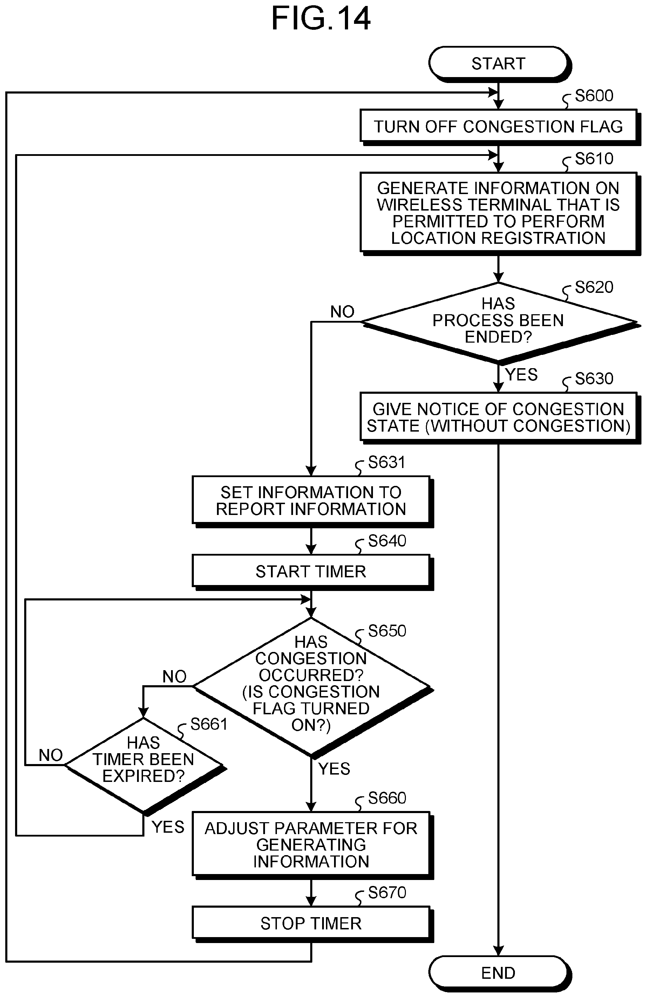

In a case where the determination unit 121 determines that the base station 100 is in the congestion state, the registration unit 123 performs a registration process, in a predetermined order, on the wireless terminal 200 that has sent the location registration request. In other words, in a case where the determination unit 121 determines that the base station 100 is in the congestion state that has occurred as a result of the location registration requests sent from the large number of wireless terminals 200 to the base station 100 being concentrated in the base station 100, the registration unit 123 performs the location registration process on the wireless terminal 200 in accordance with, for example, the order that is determined in advance. Specifically, the registration unit 123 generates information on the wireless terminal 200 that is permitted to conduct a location registration, and performs the registration process in accordance with the order indicated by the information. Furthermore, the processes performed by the registration unit 123 are indicated at Steps S610, S620, S631, S640, S660, S661, and S670 by using the flowchart illustrated in FIG. 14 that will be described later; therefore, descriptions of the processes will be described in detail with reference to FIG. 14.

A wireless communication unit 130 performs communication with a device that is located outside by using radio waves. The wireless communication unit 130 transmits and receives information to and from the wireless terminal 200. The wireless communication unit 130 may be implemented by a wireless communication circuit that is provided with, for example, an antenna.

The storage unit 140 stores therein various kinds of data. The storage unit 140 includes a main storage device and an auxiliary storage device. The main storage device may be implemented by, for example, a semiconductor memory device, such as a random access memory (RAM), a read only memory (ROM), and a flash memory. Furthermore, the auxiliary storage device may be implemented by, for example, a hard disk, a Solid State Drive (SSD), an optical disk, or the like.

### (Configuration of wireless terminal)

In the following, a configuration of the wireless terminal 200 according to the present disclosure will be described with reference to FIG. 3. FIG. 3 is a diagram illustrating an example of the configuration of the wireless terminal according to the present disclosure.

A control unit 210 controls each of the units included in the wireless terminal 200, performs a process based on a request received from an outside of the wireless terminal 200, makes a request to the outside, outputs a processed result, and the like. The control unit 210 is implemented by causing a CPU, an MPU, or the like to execute various programs stored in a storage unit 230 by using a RAM as a work area. Furthermore, the control unit 210 may be implemented by, for example, an integrated circuit, such as an ASIC or an FPGA.

As illustrated in FIG. 3, the control unit 210 includes a stopping unit 211. The control unit 210 implements the stopping unit 211 by reading a programs (software) from the storage unit 230 and executing the programs (software). Furthermore, the control unit 210 may perform these processes by a single CPU, or may include a plurality of CPUs and perform these processes by the plurality of CPUs in parallel.

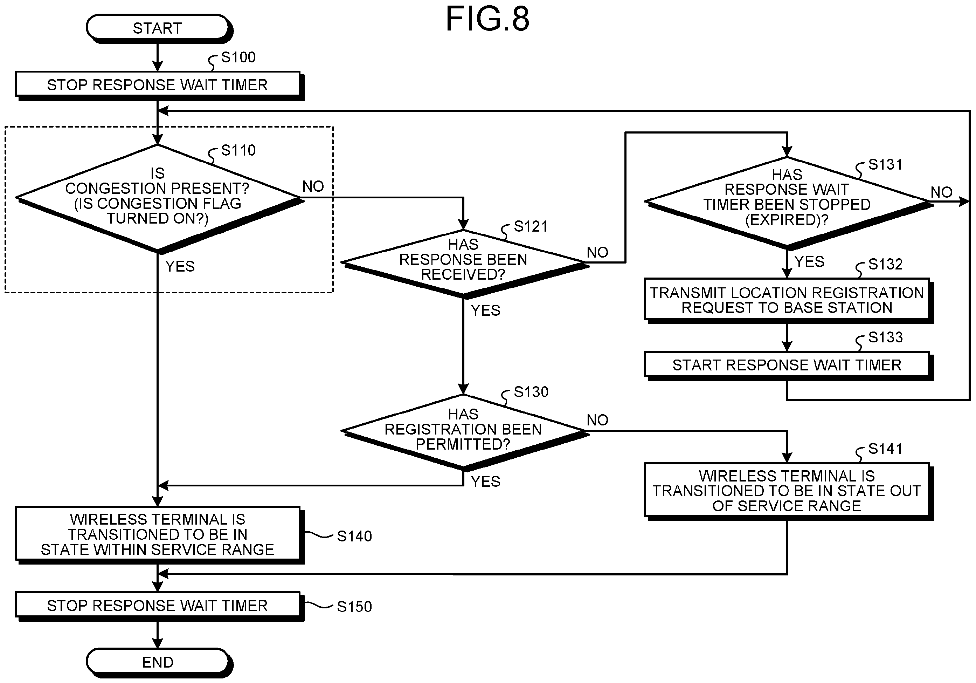

When the stopping unit 211 receives the congestion occurrence notification, the stopping unit 211 stops the location registration request, and allows the wireless terminal 200 to be within service range such that the wireless terminal 200 is able to make outgoing and incoming calls. The wireless terminal 200 reads out the congestion state of the base station 100 from a congestion state storage unit 231, and determines whether the base station 100 is in a state with congestion or a state without congestion. In a case where the congestion state is in a state with congestion, the stopping unit 211 stops the location registration request output from the wireless terminal 200, and allows the state of the wireless terminal 200 to be transitioned to a state within service range. Furthermore, the processes performed by the stopping unit 211 are indicated at Steps S110, S140, and S150 by using the flowchart illustrated in FIG. 8 that will be described later; therefore, descriptions of the processes will be described in detail with reference to FIG. 8.

A wireless communication unit 220 performs wireless communication, and transmits and receives information to and from the other wireless terminal 200 and the base station 100. The wireless communication unit 220 may be implemented by a wireless communication circuit that is provided with, for example, an antenna.

The storage unit 230 stores therein various kinds of data. The storage unit 230 includes a main storage device and an auxiliary storage device. The main storage device may be implemented by, for example, a semiconductor memory device, such as a RAM, a ROM, or a flash memory. Furthermore, the auxiliary storage device may be implemented by, for example, a hard disk, an SSD, an optical disk, or the like.

As illustrated in FIG. 3, the storage unit 230 includes the congestion state storage unit 231. The information stored in the congestion state storage unit 231 is the same as that stored in a congestion state storage unit 333 that is included in the management device 300 and that will be described later; therefore, descriptions thereof will be omitted.

### (Configuration of management device)

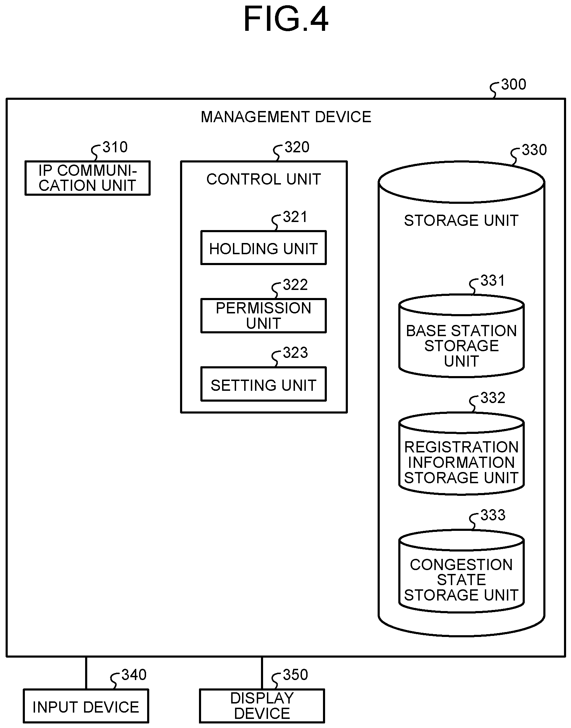

In the following, a configuration of the management device 300 according to the present disclosure will be described with reference to FIG. 4. FIG. 4 is a diagram illustrating an example of the configuration of the management device according to the present disclosure.

An IP communication unit 310 performs communication via the IP network and sends and receives information to and from the other devices. The IP communication unit 310 may be implemented by a network interface circuit provided with, for example, a LAN port, or a wireless Local Area Network (LAN) card.

A control unit 320 controls each of the units included in the management device 300, performs a process based on a request received from an outside, and outputs a request or a result to the outside as needed. The control unit 320 is implemented by causing a CPU, an MPU, or the like to execute various programs stored in a storage unit 330 by using a RAM as a work area. Furthermore, the control unit 320 may be implemented by, for example, an integrated circuit, such as an ASIC or an FPGA.

As illustrated in FIG. 4, the control unit 320 includes a holding unit 321, a permission unit 322, and a setting unit 323. The control unit 320 implements the holding unit 321, the permission unit 322, and the setting unit 323 by reading a programs (software) from the storage unit 330 and executing the programs (software). Furthermore, the control unit 320 may perform these processes by a single CPU, or may include a plurality of CPUs and perform these processes by the plurality of CPUs in parallel.

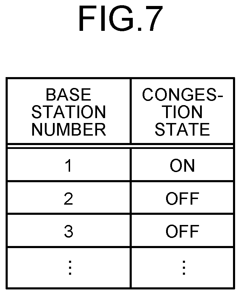

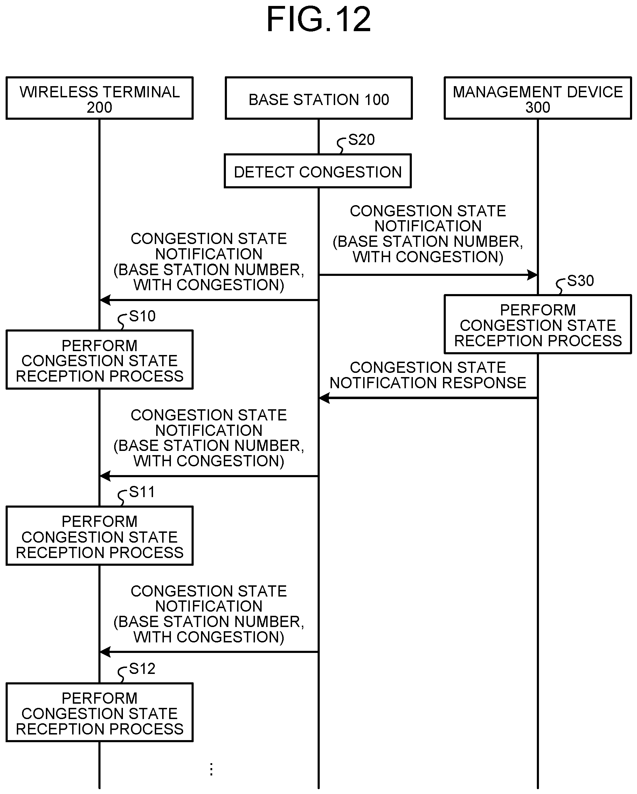

When the holding unit 321 receives a congestion occurrence notification, the holding unit 321 holds a congestion state of the corresponding base station that is being congested. In other words, when the management device 300 receives the congestion occurrence notification from the base station 100, the holding unit 321 stores the received congestion occurrence notification in the congestion state storage unit 333. As illustrated in FIG. 7, the congestion state for each of the base stations 100 may be stored such that, for example, the congestion state is indicated ON in a case where the congestion state is a state with congestion, whereas the congestion state is indicated OFF in a case where the congestion state is a state without congestion. Furthermore, the process performed by the holding unit 321 is indicated at Step S30 by using the flowchart illustrated in FIG. 12 that will be described later; therefore, descriptions of the processes will be described in detail with reference to FIG. 12.

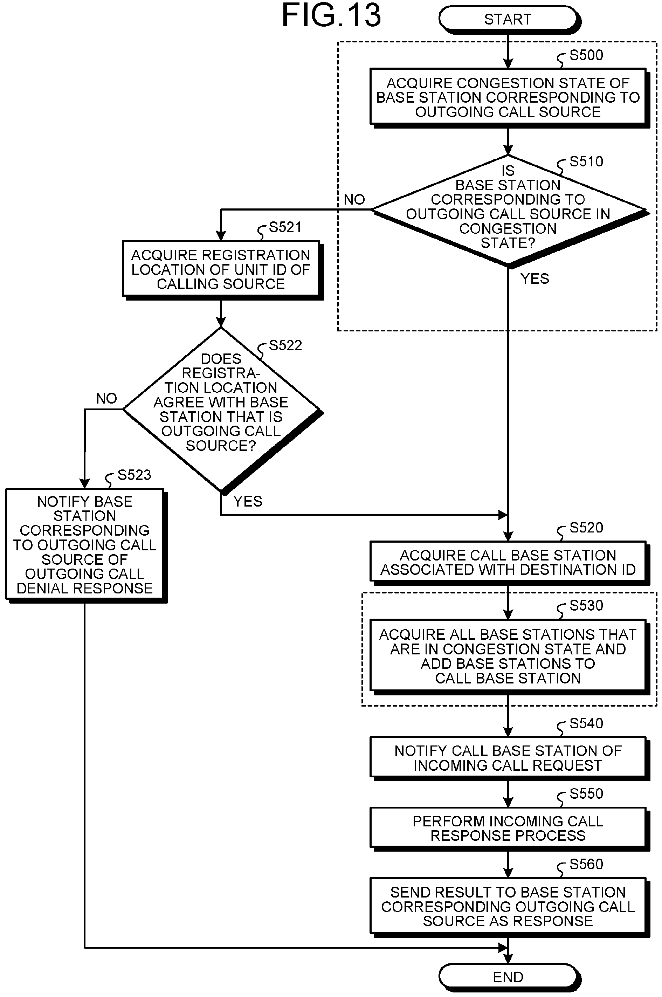

The permission unit 322 permits transmission to the corresponding base station 100 that is being congested, in the outgoing call management process requested by the wireless terminal 200. In other words, when the wireless terminal 200 that is in the area covered by the base station 100 has sent an outgoing call request to the corresponding base station 100, the corresponding base station 100 notifies the management device 300 of the outgoing call request. When the permission unit 322 receives this outgoing call request, the permission unit 322 acquires the congestion state of the base station 100 that is the outgoing call source. If the base station 100 corresponding to the outgoing call source is in a congestion state, the permission unit 322 acquires a call base station that is associated with the destination ID and that is called by the wireless terminal 200, acquires the base station 100 that is in the congestion state from the congestion state storage unit 333, and adds the acquired base station 100 to the calling base station. Furthermore, the process performed by the permission unit 322 is indicated at Step S530 by using the flowchart illustrated in FIG. 13 that will be described later; therefore, descriptions of the processes will be described in detail with reference to FIG. 13.

The setting unit 323 sets the corresponding base station 100 that is being congested to be included in the calling base station associated with the wireless terminal 200. In other words, the setting unit 323 sets the corresponding base station 100 that is being congested such that the wireless terminal 200 is able to make outgoing and incoming calls by including the corresponding base station 100 that is being congested in the calling base station associated with the wireless terminal 200.

The storage unit 330 stores therein various kinds of data. The storage unit 330 includes a base station storage unit 331, a registration information storage unit 332, and the congestion state storage unit 333. Various different types of information are stored in each of the base station storage unit 331, the registration information storage unit 332, and the congestion state storage unit 333. In the following, one example of these pieces of information will be described.

### (Regarding base station storage unit)

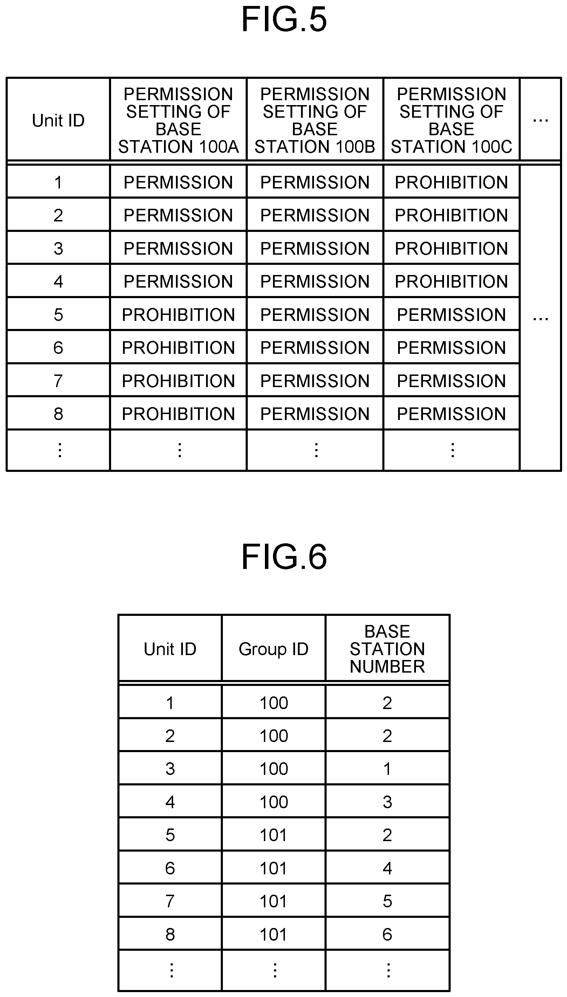

The base station storage unit 331 stores therein the base station 100 that is able to be used by each of the wireless terminals 200, that is, the base station 100 that permits the location registration request that is to be sent from each of the wireless terminal 200. The base station 100 that is able to be used by each of the wireless terminal 200 may be one, may be the plurality of base stations 100, or may be all of the base stations 100. In the following, one example of the information stored in the base station storage unit 331 will be described with reference to FIG. 5.

FIG. 5 is one example of the information stored in the base station storage unit according to the present disclosure. As illustrated in FIG. 5, the base station storage unit 331 stores therein, in an associated manner, information related to items indicated by a "Unit ID", a "permission setting of a base station 100A", a "permission setting of a base station 100B", a "permission setting of a base station 100C", ..., and the like.

The "Unit ID" is an identifier for identifying each of the wireless terminals 200. The "permission setting of the base station 100A" is a permission setting for the location registration requested by the wireless terminal 200 with respect to the base station 100A, and is indicated by permission or prohibition. The "permission setting of the base station 100B" is a permission setting for the location registration requested by the wireless terminal 200 with respect to the base station 100B, and is indicated by permission or prohibition. The "permission setting of the base station 100C" is a permission setting for the location registration requested by the wireless terminal 200 with respect to the base station 100C, and is indicated by permission or prohibition.

For example, in the example illustrated in FIG. 5, it is indicated that the wireless terminal 200 to which the "Unit ID" denoted by 1 is allocated is allowed to use the "base station 100A", is allowed to use the "base station 100B", and is prohibited to use the "base station 100C".

Furthermore, in FIG. 5, the base station 100 that is available for use is set for each "Unit ID" for identifying the respective wireless terminals 200, but the base station 100 that is available for use may be set for each "Group ID" for identifying a group that is used at the time of group communication.

In addition, these settings are performed by a user via an input device 340 and a display device 350 that are included in the management device 300, and the set content is stored in the base station storage unit 331 included in the management device 300.

### (Regarding registration information storage unit)

The registration information storage unit 332 stores therein information related to the wireless terminal 200 that is subjected to location registration performed by the management device 300 in response to the location registration request sent from the wireless terminal 200. In the following, one example of the information stored in the registration information storage unit 332 will be described with reference to FIG. 6.

FIG. 6 is a diagram illustrating one example of the information stored in the registration information storage unit according to the present disclosure. As illustrated in FIG. 6, the registration information storage unit 332 stores therein, in an associated manner, information related to items indicated by a "Unit ID", a "Group ID", and a "base station number".

The "Unit ID" is an identifier for identifying each of the wireless terminals 200. The "Group ID" is an identifier for identifying a group that is used at the time of group communication. The "base station number" is a number for identifying each of the base stations 100.

For example, in the example illustrated in FIG. 6, it is indicated that the wireless terminal 200 to which the "Unit ID" denoted by 1 is allocated belongs to the group to which the "Group ID" denoted by 100 is allocated, the location registration request has been approved as a result of sending a location registration request to the base station 100 to which the "base station number" denoted by 2 is allocated, and the information and the obtained results are stored in the registration information storage unit 332.

In other words, these pieces of information are included in the location registration request that is notified from the base station 100 to the management device 300, and when the management device 300 approves the location registration request, the management device 300 stores therein these pieces of information in the registration information storage unit 332.

### (Regarding congestion state storage unit)

The congestion state storage unit 333 stores therein congestion information on each of the base stations 100 held by the management device 300. When the management device 300 receives the congestion state notification from the base station 100, the congestion state of the corresponding base station 100 is stored in the congestion state storage unit 333. In the following, one example of the information stored in the congestion state storage unit 333 will be described with reference to FIG. 7.

FIG. 7 is a diagram illustrating one example of the information stored in the congestion state storage unit according to the present disclosure. As illustrated in FIG. 7, the congestion state storage unit 333 stores therein, in an associated manner, information related to items indicated by a "base station number" and a "congestion state".

The "base station number" is a number for identifying each of the base stations 100. The "congestion state" indicates a congestion state of the base station to which the "base station number" is allocated, and is stored such that, for example, the congestion state is indicated ON in a case where the congestion state is a state with congestion, whereas the congestion state is indicated OFF in a case where the congestion state is a state without congestion. As illustrated in FIG. 7, the congestion state is stored for each base station.

For example, in the example illustrated in FIG. 7, it is indicated that the "congestion state" of the base station to which the "base station number" denoted by 1 is allocated is in a state with congestion.

### (Input device)

The input device 340 receives an operation performed by the user. The input device 340 may be implemented by, for example, a keyboard, a mouse, and the like. Furthermore, the input device 340 may be implemented by a dedicated console panel constituted by a combination of a plurality of switches. The process of the management device 300 is performed on the basis of the operation that is input to the input device 340 by the user.

### (Display device)

The display device 350 displays information with respect to the user. The display device 350 receives the information to be displayed from the control unit 320, and displays various kinds of information on the basis of the received information. The display device 350 may be implemented by a display device, such as a liquid crystal display, an organic electro luminescence (EL) display, or a microphone light emitting diode (LED) display.

Furthermore, the input device 340 and a display device 350 may be connected to a management purpose management personal computer that is different from the management device 300, instead of directly being connected to the management device 300, and the management purpose management personal computer and the management device 300 may be connected by the IP network N.

### (Regarding IP network)

The IP network N connects a plurality of devices by using the Internet protocol suite technology such that the devices are communicable with each other in a wired or wireless manner, and is a communication network that manages transmission and reception of information each other. In a case of a wired manner, Ethernet (registered trademark) specified in IEEE 802.3 may be used. In a case of a wireless manner, a wireless LAN , Bluetooth (registered trademark), the fourth generation mobile communication system (4G), the fifth generation mobile communication system (5G) specified in IEEE 802.11 may be used.

### (Location registration process)

In the following, the location registration process will be described. The location registration process mentioned here indicates the process of registering the wireless terminal 200 to the base station 100. By registering the wireless terminal 200 to the base station 100, the outgoing and incoming calls to the other wireless terminals 200 are available via the base station 100 in which the wireless terminal 200 has been registered. In the following, the location registration process performed by each of the wireless terminal 200, the base station 100, and the management device 300 will be described in this order.

### (Location registration process performed by wireless terminal)

FIG. 8 is a flowchart illustrating the flow of the location registration process performed by the wireless terminal according to the present disclosure. A location registration request process performed by the wireless terminal 200 will be described with reference to FIG. 8.

First, the wireless terminal 200 stops a response wait timer for a response from the base station 100 (Step S100). Furthermore, the response in a waiting for a response from the base station 100 indicates a response from the base station 100 with respect to the location registration request sent from the wireless terminal 200. Then, the wireless terminal 200 reads out the congestion state of the base station 100 from the congestion state storage unit 23, determines whether the base station 100 is in a state with congestion or in a state without congestion (Step S110). Furthermore, here, the congestion state notification received from the base station 100 is stored in the congestion state storage unit 231, and the congestion state notification is used to notify the wireless terminal 200 of the congestion state of the base station 100. Information indicating whether or not congestion occurs may be stored in the congestion state storage unit 231 on the basis of the instruction from the control unit 210 included in the wireless terminal 200 such that, for example, when the congestion state notification is received, a congestion flag is turned ON in a case where the congestion state is a state with congestion, whereas the congestion flag is turned OFF in a case where the congestion state is a state without congestion. In a case where the congestion state of the base station 100 is a state with congestion (Yes at Step S110), the wireless terminal 200 is transitioned to be in a state within service range (Step S140). Furthermore, the term of the state within service range indicates that the wireless terminal 200 is in a state in which the wireless terminal 200 receives an outgoing call operation that is performed by using the base station 100 in which the location registration has been registered, or receives an incoming call from the base station 100. Then, the wireless terminal 200 stops the response wait timer (Step S150).

In a case where the congestion state of the base station 100 is a state without congestion (No at Step S110), the wireless terminal 200 determines whether or not a response has been received from the base station 100 (Step S121). If a response has been received from the base station 100 (Yes at Step S121), the wireless terminal 200 checks the response reception information, and determines whether or not registration has been permitted (Step S130). If the registration has been permitted (Yes at Step S130), the wireless terminal 200 performs the processes at Step S140 and Step S150 described above. Furthermore, if the registration has not been permitted (No at Step S130) the wireless terminal 200 is transitioned to be in a state in which the wireless terminal 200 is out of service range (Step S141). Here, the state in which the wireless terminal 200 is out of service range indicates a state in which the wireless terminal 200 does not accept an outgoing call operation to be performed by using the base station 100 or an incoming call from the base station 100. Then, the wireless terminal 200 stops the response wait timer (Step S150).

If a response is not received from the base station 100 (No at Step S121), the wireless terminal 200 determines whether or not the response wait timer is stopped or expired (Step S131). If the response wait timer is stopped or expired (Yes at Step S131), the wireless terminal 200 transmits a location registration request to the base station 100 (Step S132). Then, the wireless terminal 200 starts the response wait timer (Step S133). Then, the wireless terminal 200 returns to Step S110, and performs the processes at Step S110 and the subsequent processes. Furthermore, at Step S131, if the response wait timer is stopped or expired (No at Step S131), the wireless terminal 200 returns to Step S110, and performs the process at Step S110 and the subsequent processes.

As a result of this, even if the base station 100 is in a congestion state, the wireless terminal 200 is able to send and receive information to and from the base station 100 by allowing the wireless terminal 200 to be in a state in which the wireless terminal 200 is within service range.

### (Location registration process performed by base station)

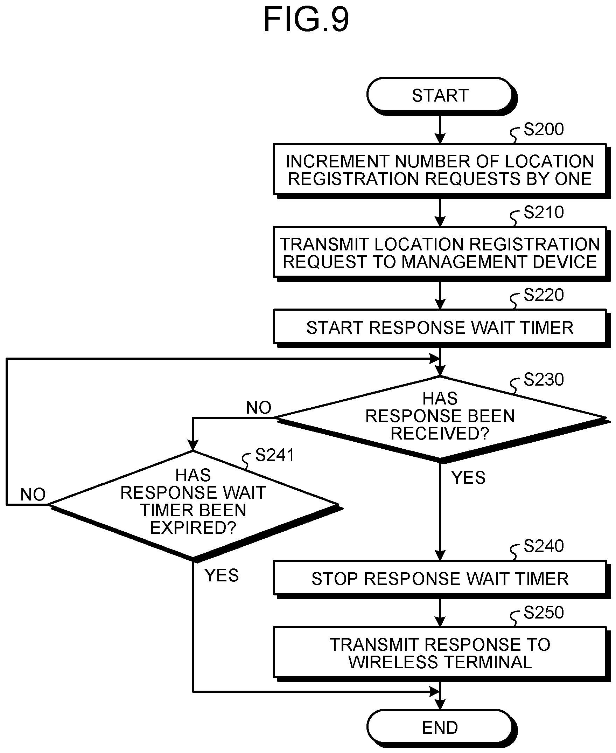

In the following, the location registration process performed by the base station 100 will be described with reference to FIG. 9. FIG. 9 is a flowchart illustrating the flow of the location registration process performed by the base station according to the present disclosure.

First, when the base station 100 receives the location registration request from the wireless terminal 200, the base station 100 increments the number of location registration requests by one (Step S200). Then, the base station 100 transmits the location registration request to the management device 300 (Step S210). Then, the wireless terminal 200 starts the response wait timer (Step S220). Then, the base station 100 determines whether or not a response has been received from the management device 300 (Step S230). If a response has been received from the management device 300 (Yes at Step S230), the base station 100 stops the response wait timer (Step S240). Then, the base station 100 transmits the response that has been received from the management device 300 to the wireless terminal 200 (Step S250). Then, the location registration process of the base station 100 has been completed.

Furthermore, if the base station 100 has not received a response from the management device 300 (No at Step S230), the base station 100 determines whether or not the response wait timer has been expired (Step S241). If the response wait timer has been expired (Yes at Step S241), the base station 100 completes the process. If the response wait timer has not been expired (No at Step S241), the base station 100 returns to Step S230, and performs the process at Step S230 and the subsequent processes.

As a result of this, the base station 100 is able to appropriately handle the location registration request sent from the wireless terminal 200.

### (Location registration process performed by management device)

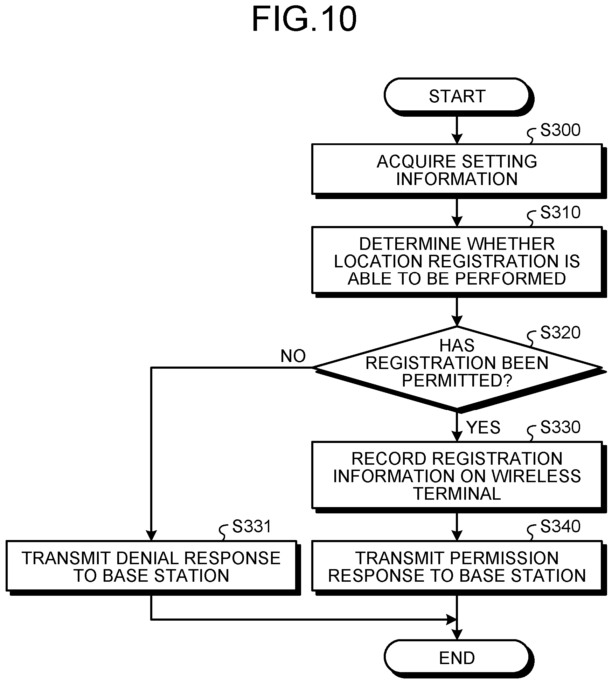

In the following, the location registration process performed by the management device 300 will be described with reference to FIG. 10. FIG. 10 is a flowchart illustrating the location registration process performed by the management device according to the present disclosure.

First, when the management device 300 receives the location registration request from the base station 100, the management device 300 acquires setting information (Step S300). Then, the management device 300 determines whether or not location registration is able to be performed on the basis of the setting information (Step S310). If the management device 300 permits the registration (Yes at Step S320), the management device 300 stores the registration information on the wireless terminal 200 (Step S330). Next, the management device 300 transmits a permission response to the base station 100 (Step S340). Then, the management device 300 completes the location registration process. Furthermore, at Step S320, if the management device 300 does not permit the registration of the wireless terminal 200 (No at Step S320), the management device 300 transmits a denial response indicating that the registration of the wireless terminal 200 has been denied to the base station 100 (Step S331). Then, the management device 300 completes the location registration process.

As a result of this, the management device 300 is able to appropriately handle the location registration request received from the base station 100 that has received the location registration request sent from the wireless terminal 200.

### (Congestion detection process)

In the following, a congestion detection process performed by the base station 100 will be described with reference to FIG. 11. The congestion detection process mentioned here indicates a process of detecting whether or not congestion has occurred in the base station 100. First, the base station 100 sets the number of times a threshold is exceeded to zero (Step S400). Then, the base station 100 sets the number of location registration requests to zero (Step S410). Next, the base station 100 starts the timer (Step S420). Next, the base station 100 determines whether or not the congestion detection process has been ended (Step S430). Furthermore, an example of a case in which the congestion detection process has been ended includes, at the time of, for example, the end of a program, or a case in which this process is not needed for some reason, but, in a period of time in which the base station 100 is being operated, this process may always be operated without being ended. If the congestion detection process has been ended (Yes at Step S430), the base station 100 stops the timer (Step S440), and completes the congestion detection process as a state without congestion.

Furthermore, at Step S430, if the congestion detection process has not been ended (No at Step S430), the base station 100 determines whether or not one second has been elapsed (Step S441). If one second has been elapsed (Yes at Step S441), the base station 100 acquires the number of location registration requests sent from the wireless terminals 200 (Step S450). If one second has not been elapsed (No at Step S441), the base station 100 returns to Step S430, and determines that the congestion detection process has been ended. In other words, in the case where the congestion detection process has not been ended, it can be said that the base station 100 performs a process of counting the number of location registration requests received in one second. Furthermore, the number of location registration requests is incremented every time the base station 100 receives the location registration request sent from the wireless terminal 200 as illustrated in FIG. 9. Next, the base station 100 determines whether or not the number of location registration requests exceeds the threshold (Step S460).

If the number of location registration requests exceeds the threshold (Yes at Step S460), the base station 100 increments the number of times the threshold is exceeded by one (Step S470). Then, the base station 100 determines whether or not the number of times the threshold is exceeded exceeds an upper limit (Step S480). If the number of times the threshold is exceeded exceeds an upper limit (Yes at Step S480), the base station 100 stores the occurrence of congestion, that is, stores the congestion flag as ON (Step S490). Then, the base station 100 performs congestion state notification process of setting such that the state of the base station 100 is a state with congestion (Step S495). Furthermore, the congestion state notification process performed here will be described later. With the processes described above, in a case where the threshold of the number of location registration requests received in one second continues for a given length of time, the base station 100 determines that congestion has occurred. Then, the base station 100 returns to Step S400, and performs the process at Step S400 and the subsequent processes.

At Step S460, if the number of location registration requests does not exceed the threshold (No at Step S460), the base station 100 returns to Step S400, and performs the process at Step S400 and the subsequent processes. Furthermore, at Step S480, the number of times the threshold is exceeded does not exceeds the upper limit (No at Step S480), the base station 100 returns to Step S410, and performs the process at Step S410 and the subsequent processes.

Here, regarding the threshold of the number of location registration requests allowed in one second, the upper limit of the number of times the threshold is exceeded, that is, a period of time in which congestion is allowed, a value that is always fixed may be used, or value may be changed or adjusted for each of the wireless communication system 10. In a case where the value is changed or adjusted, for example, by using the input device 340 and the display device 350 included in the management device 300, the user inputs 10 indicating the threshold associated with a wireless communication system 10A, inputs 5 indicating the upper limit of the number of times the threshold is exceeded, inputs 15 as the threshold associated with a wireless communication system 10B, and inputs 10 indicating the upper limit of the number of times the threshold is exceeded; the management device 300 stores the set content in the storage unit 330, notifies each of the base stations 100 of these set values; and each of the base stations 100 uses the notified value. Alternatively, the set content may be stored in the storage unit 140 included in each of the base stations 100. Furthermore, FIG. 11 illustrates an example in which the number of location registration requests is checked per second, but another value, such as 500 millisecond or two seconds, may be used.

As a result of this, it is possible to detect, in the base station 100, congestion occurring as a result of a lot of location registration requests sent from the wireless terminal 200 being received. In addition, when the base station 100 detects a state with congestion, the base station 100 is able to notify the wireless terminal 200 and the management device 300 of the congestion state indicating a state with congestion.

### (Notification process of congestion state)

In the following, congestion detection notification process performed when the base station 100 has detected congestion will be described with reference to FIG. 12. FIG. 12 is a flowchart illustrating the flow of the congestion state notification according to the present disclosure.

First, the base station 100 detects a congestion state (Step S20). Next, when the base station 100 detects the congestion state indicating a state with congestion, the base station 100 transmits the base station number and a congestion state notification indicating a state with congestion to the wireless terminal 200 and the management device 300. In the congestion state notification, the base station number for identifying the corresponding base station 100, information indicating whether or not congestion has occurred, that is, information indicating a state with congestion, are included. The base station 100 reports the congestion state notification to the wireless terminal 200 as illustrated in FIG. 12 at regular intervals in order to also notify both of the wireless terminal 200 that moves into an area available for outgoing and incoming calls covered by the corresponding base station 100 after the base station 100 has detected the congestion and the wireless terminal 200 that is powered on within service range of the corresponding base station 100. The wireless terminal 200 performs the congestion state reception process every time the wireless terminal 200 receives the congestion state notification (Steps S10, S11, and S12). Furthermore, similarly, when the management device 300 receives the congestion state notification, the management device 300 performs the congestion state reception process (Step S30). Then, the management device 300 returns a response to the corresponding base station 100. Although not illustrated in FIG. 12, if a response is not received from the management device 300, the base station 100 retransmits the congestion state notification to the management device 300.

In the following, the congestion state reception process (Step S10) performed by the wireless terminal 200 illustrated in FIG. 12 will be described. When the wireless terminal 200 receives the congestion state notification indicating a state with congestion from the base station 100, the wireless terminal 200 acquires the base station number included in the congestion state notification, and ends the process after recording, in the control unit 210, a state with congestion related to the corresponding base station 100. The state with congestion may be recorded such that, for example, a congestion flag related to the corresponding base station 100 is turned ON. As a result of the state with congestion being recorded, as illustrated in FIG. 8, the wireless terminal 200 is transitioned to a state within service range, and ends the location registration process. As a result of this, even if the location registration has not been completed, the wireless terminal 200 enters a state in which the wireless terminal 200 is able to make outgoing and incoming calls using the corresponding base station 100.

In the following, the congestion state reception process (Step S30) performed by the management device 300 illustrated in FIG. 12 will be described. When the management device 300 receives the congestion state notification from the base station 100, the management device 300 stores the congestion state of the corresponding base station 100 in the congestion state storage unit 333. The congestion state may be stored such that, for example, the congestion state is indicated ON in a case where the congestion state is a state with congestion, whereas the congestion state is indicated OFF in a case where the congestion state is a state without congestion. The congestion state stores the information for each of the base stations 100.

As a result of this, when the base station 100 detects the congestion state, the base station 100 is able to notify the wireless terminal 200 and the management device 300 of the congestion state.

### (Process of outgoing and incoming calls performed when congested base station is present)

### (Outgoing call request process performed by management device)

In the following, a process performed from when the management device 300 receives the outgoing call request from the base station 100 in a case where the congestion state has been detected in the base station 100 until a call is given to the destination base station 100 will be described. FIG. 13 is a flowchart illustrating the flow of the outgoing call request process performed by the management device according to the present disclosure.

When the wireless terminal 200 that is in the area of the base station 100 has sent an outgoing call request to the corresponding base station 100, the corresponding base station 100 notifies the management device 300 of the outgoing call request. When the management device 300 receives this outgoing call request, first, the management device 300 acquires the congestion state of the base station 100 that is the outgoing call source from the congestion state storage unit 333 that stores information indicated as an example illustrated in FIG. 7 (Step S500). Then, the management device 300 determines whether or not the base station 100 corresponding to the outgoing call source is in a congestion state (Step S510). If the base station 100 corresponding to the outgoing call source is in a congestion state (Yes at Step S510), the management device 300 acquires the call base station that is the destination ID associated with the wireless terminal 200 (Step S520). For example, in a case where the destination ID with the "Unit ID" denoted by 2 is used for individual communication, the calling base station is obtained by reading out and acquiring the base station number with the "Unit ID" denoted by 2 from the information stored in the registration information storage unit 332. Furthermore, in a case where the "Group ID" of the destination ID denoted by 100 is used for group communication, the calling base station is obtained by collectively reading out and acquiring the base station number with the "Group ID" denoted by 100 from the information stored in the registration information storage unit 332.

In the following, the management device 300 acquires the base station 100 that is in a congestion state from the congestion state storage unit 333 and adds the acquired base station 100 to the call base station (Step S530). In the case of the example illustrated in FIG. 7, the base station 100 to which 1 is allocated to the "base station number" is in a congestion state, so that, in the case of the above described example in which the individual communication is used for the wireless terminal 200 to which "Unit ID" denoted by 2 is allocated and that is associated with the above described destination ID, the base station 100 to which "base station number" denoted by 1 is allocated is also added to the calling base station. Furthermore, in the case of the example in which the group communication is used for the destination ID associated with the "Group ID" denoted by 100, the base station 100 to which the "base station number" denoted by 1 is allocated is also added to the calling base station. Furthermore, in a case where the base station 100 to which the "base station number" denoted by 1 is allocated has already been included in the calling base station, the calling base station remains the same. By adding the base station 100 that is being congested to the calling base station, it is possible to call the wireless terminal 200 that has moved into the area that is covered by the base station 100 that is being congested and in which outgoing and incoming calls are available, but in which the location registration for the wireless terminal 200 has not been completed.

Next, the management device 300 notifies the call base station of an incoming call request (Step S540). Then, the management device 300 performs the incoming call response process (Step S550). In the case of the example in which the individual communication is used for the wireless terminal 200 to which the "Unit ID" denoted by 2 is allocated and that is associated with the destination ID, the incoming call request is notified to the base stations 100 to which the "base station numbers" denoted by 1 and 2 are allocated, respectively. The base station 100 that has received the incoming call request calls the wireless terminal 200, and responds to the management device 300 with the call result. The management device 300 that has received the response from the base station 100 that received the incoming call responds to the base station 100 corresponding to the outgoing call source with the call result (Step S560), and ends the outgoing call request process. Furthermore, although not illustrated in FIG. 13, in a case where a response is not able to be received from the base station 100 that received the incoming call for a given period of time, a timer process of regarding the call result as fail is included in the incoming call response process.

Furthermore, at Step S510, if the base station 100 corresponding to the outgoing call source is not in a congestion state (No at Step S510), the management device 300 acquires the registration location of the "Unit ID" of the wireless terminal 200 that is the outgoing call source from the registration information storage unit 332 by reading out the registration location (Step S521). Then, the management device 300 determines whether or not the acquired registration location of the wireless terminal 200 agrees with the base station 100 that is the outgoing call source (Step S522).

If the acquired registration location of the wireless terminal 200 agrees with the base station 100 (Yes at Step S522), the management device 300 performs the process at Step S520 that has been described above, and sequentially performs the process at Step S520 and the subsequent processes as described above. Furthermore, at Step S522, if the acquired registration location of the wireless terminal 200 does not agree with the base station 100 (No at Step S522), the registration location of the wireless terminal 200 is inconsistent, so that the management device 300 notifies the base station 100 corresponding to the outgoing call source of an outgoing call denial response (Step S523). At this time, the wireless terminal 200 may send a location registration request again, and may perform operation of dissolving the inconsistency of the location registration. Then, the management device 300 completes the process.

As a result of this, even in a case where a congestion state occurs in the base station 100, the management device 300 always allows an outgoing call from the base station 100 that is in the congestion state to be made. Accordingly, even for the wireless terminal 200 that is located in the area that is covered by the base station 100 that is being congested and in which outgoing and incoming calls are available but has not completed the location registration, the wireless terminal 200 is able to make an outgoing call and an incoming call via the base station 100 that is being congested.

### (Resolution process of resolving congestion state performed by base station)

In the following, a resolution process of resolving a congestion state performed by the base station 100 will be described with reference to FIG. 14. FIG. 14 is a flowchart illustrating the flow of the congestion resolution process performed by the base station according to the present disclosure.

First, the base station 100 sets the congestion flag to OFF (Step S600). Then, the base station 100 generates information on the wireless terminal 200 that is allowed to perform the location registration (Step S610). The information may be information related to the range from 1 to 10 for, for example, the "Unit ID", or may be information related to a plurality of designated IDs themselves, instead of information related to the "Unit ID" denoted by 1, 5, 11, and 13. A method of designating the "Unit ID" may be performed by simply and sequentially designating the number starting from one, or by extracting only the "Unit IDs" that are allowed to use the corresponding base station from the information illustrated in FIG. 5 and individually designating the extracted "Unit IDs". Alternatively, the management device 300 may count the number of incoming calls for each "Unit ID", sequentially designate the "Unit ID" in the order of a larger number of incoming calls, and complete the location registration in the order of the wireless terminals that are easier to be called. Furthermore, instead of the "Unit ID", it is possible to use, for example, a method of using information, such as a serial number, that is able to identify the wireless terminal 200 may be designated, a method of designating a specific value on the base station 100 side and performing the location registration as long as the reminder left when the own "Unit ID" is divided by that value on the wireless terminal 200 side is zero. Moreover, the methods described above may be used in combination instead of using one of the methods alone.

Next, the base station 100 determines whether or not the congestion resolution process has been completed (Step S620). Specifically, in a case of an example in which the above described "Unit IDs" are sequentially designated, determination is performed on the basis of the completion condition based on the information related to the wireless terminal 200 that is allowed to perform the location registration by determining that the process has not been completed in a case where the wireless terminal 200 that is allowed to perform the location registration is still present, determining that the process has been completed in a case where the wireless terminal 200 that is allowed to perform the location registration is not present, or the like.

If the congestion resolution process has been completed (Yes at Step S620), the base station 100 notifies of the congestion state as a state without congestion (Step S630). Then, the base station 100 completes the congestion state resolution process.

At Step S620, if the congestion resolution process has not been completed (No at Step S620), the information generated at Step S610 is set to the notification information (Step S631). The notification information is notified to the wireless terminal 200 from the base station 100 at certain time intervals. Then, the base station 100 starts a timer that is used to report the information generated at Step S610 for a given period of time (Step S640). In the period of time until the timer that has been set here has been expired, the set notification information is notified to the wireless terminal 200, so that a location registration request is sent from the corresponding wireless terminal 200. At this time, the congestion detection process performed by the base station 100 illustrated in FIG. 11 is performed in parallel (Step S650). As a result of this, if congestion is again detected (Yes at Step S650), a parameter for generating the information is adjusted by, for example, the number of wireless terminals 200 that are allowed to perform location registration is reduced, or the like (Step S660). Then, the base station 100 returns to Step S600, and performs the process at Step S600 and the subsequent processes. As a result of this, after the parameter has been adjusted, information is again generated, and is set to the notification information.

Furthermore, at Step S650, if congestion does not occur (No at Step S650), the base station 100 determines whether or not the timer has been expired (Step S661). If the timer has been expired (Yes at Step S661), the base station 100 returns to Step S610, and performs the process at Step S610 and the subsequent processes. If the timer has not been expired (No at Step S661), the base station 100 returns to Step S650, and performs the process at Step S650 and the subsequent processes.

As a result of this, the base station 100 is able to dissolve the congestion occurring as a result of the location registration requests received from the large number of wireless terminals 200 being concentrated.

### (Configuration and effects)

The wireless communication system 10 according to the present disclosure is a wireless communication system that includes the base station 100, the wireless terminal 200, and the management device 300. The base station 100 includes the determination unit 121 that determines that the base station 100 is in a congestion state when the number of wireless terminals each having sent a location registration request that is received by the base station within a predetermined period of time exceeds a predetermined number, and the notification unit 122 that transmits a congestion occurrence notification to the wireless terminal 200 and the management device 300 when the determination unit 121 determines that the base station 100 is in the congestion state. The wireless terminal 200 includes the stopping unit 211 that stops the location registration request when the wireless terminal 200 receives the congestion occurrence notification, and that sets a setting of the wireless terminal 200 to be within service range that is available for outgoing and incoming calls.

According to this configuration, even if congestion has occurred as a result of the location registration requests received from the wireless terminals being concentrated in the base station 100, it is possible to allow the wireless terminal 200 to be within service range that is available for the outgoing and incoming calls. Therefore, it is possible to provide the wireless communication system 10 that allows for the outgoing and incoming calls even in a case where the location registration requests received from the wireless terminals are concentrated.

The management device 300 included in the wireless communication system 10 according to the present disclosure includes the storage unit 330 that stores therein a congestion state of the corresponding base station 100 that is being congested when the management device 300 receives the congestion occurrence notification, the permission unit 322 that permits, in an outgoing call management process requested by the wireless terminal 200, transmission to the corresponding base station 100 that is being congested, and the setting unit 323 that sets the corresponding base station 100 that is being congested to be included in the calling base station associated with the wireless terminal 200.

According to this configuration, even if congestion has occurred as a result of the location registration requests received from the wireless terminals being concentrated in the base station 100, the outgoing call to the base station 100 that is being congested is permitted, and the setting is performed such that the base station 100 that is being congested is included in the calling base station. As a result of this, even when the location registration requests received from the wireless terminals are concentrated in the base station 100, it is possible to provide the wireless communication system 10 that allows for outgoing and incoming calls.

The base station 100 included in the wireless communication system 10 according to the present disclosure further includes the registration unit 123 that performs registration process, in a predetermined order, on the wireless terminal 200 that has sent the location registration request is received when the determination unit 121 determines that the base station 100 is in the congestion state.

According to this configuration, even if congestion has occurred as a result of the location registration requests received from the wireless terminals being concentrated in the base station 100, the registration process is performed on the wireless terminals 200 that have sent the location registration requests in a predetermined order. As a result of this, it is possible to dissolve the congestion that has occurred in the base station 100.

The wireless communication method according to the present disclosure includes a step of determining, performed by the base station 100, that the base station 100 is in a congestion state when the number of wireless terminals 200 each having sent a location registration request that is received by the base station within a predetermined period of time exceeds a predetermined number, a step of transmitting, performed by the base station 100, a congestion occurrence notification to the wireless terminal 200 and the management device 300 when it is determined by the base station 100 that the base station 100 is in the congestion state, and a step of stopping, performed by the wireless terminal 200, the location registration request when the wireless terminal 200 receives the congestion occurrence notification, and setting, performed by the wireless terminal 200, a setting of the wireless terminal 200 to be within service range that is available for outgoing and incoming calls.

According to this configuration, even if congestion has occurred as a result of the location registration requests received from the wireless terminals being concentrated in the base station 100, it is possible to allow the wireless terminal 200 to be within service range that is available for outgoing and incoming calls. As a result of this, even when the location registration requests received from the wireless terminals are concentrated, it is possible to provide the wireless communication method capable of allowing for outgoing and incoming calls.

A program according to the present disclosure causes a computer to execute a process includes a step of determining, performed by the base station 100, that the base station 100 is in a congestion state when the number of wireless terminals 200 each having sent a location registration request that is received by the base station within a predetermined period of time exceeds a predetermined number, a step of transmitting, performed by the base station 100, a congestion occurrence notification to the wireless terminal 200 and the management device 300 when it is determined by the base station 100 that the base station 100 is in the congestion state, and a step of stopping, performed by the wireless terminal 200, the location registration request when the wireless terminal 200 receives the congestion occurrence notification, and setting, performed by the wireless terminal 200, a setting of the wireless terminal 200 to be within service range that is available for outgoing and incoming calls.

According to this configuration, even if congestion has occurred as a result of the location registration requests sent from the wireless terminals being concentrated in the base station 100, it is possible to allow the wireless terminal 200 to be within service range that is available for outgoing and incoming calls. As a result of this, it is possible to provide the program capable of allowing for outgoing and incoming calls even when the location registration requests sent from the wireless terminal are concentrated.

In the above, the embodiment of the present disclosure has been described, but the embodiment is not limited to the content of the embodiment. The components described above include one that can easily be thought of by a person skilled in the art and one that is practically identical. Further, the configurations described above may be combined appropriately that is one so called equivalents. Furthermore, various omissions, replacements, and modifications of the components may be made within the scope of the above described embodiment.

### Industrial Applicability

The wireless communication system, the wireless communication method, and the program according to the present embodiment are able to be used for the wireless communication system capable of allowing wireless terminals to make outgoing and incoming calls even if, for example, location registration requests sent from the wireless terminals are concentrated.

### Reference Signs List

- 10: wireless communication system
- 100: base station
- 110: IP communication unit
- 120: control unit
- 121: determination unit
- 122: notification unit
- 123: registration unit
- 130: wireless communication unit
- 140: storage unit
- 200: wireless terminal
- 210: control unit
- 211: stopping unit
- 220: wireless communication unit
- 300: management device
- 310: IP communication unit
- 320: control unit
- 321: holding unit
- 322: permission unit
- 323: setting unit
- 330: storage unit
- 331: base station storage unit
- 332: registration information storage unit
- 333: congestion state storage unit
- 340: input device
- 350: display device

## Claims

1. wireless communication system comprising:
a base station;
a wireless terminal; and
a management device, wherein
the base station includes
a determination unit that determines that the base station is in a congestion state when the number of wireless terminals each having sent a location registration request that is received by the base station within a predetermined period of time exceeds a predetermined number, and
a notification unit that transmits, when the determination unit determines that the base station is in the congestion state, a congestion occurrence notification to the wireless terminal and the management device, and
the wireless terminal includes
a stopping unit that stops the location registration request when the wireless terminal receives the congestion occurrence notification, and that sets a setting of the wireless terminal to be within service range that is available for outgoing and incoming calls.

2. The wireless communication system according to claim 1, wherein
the management device includes
a storage unit that stores therein the congestion state of the corresponding base station that is being congested when the management device receives the congestion occurrence notification,
a permission unit that permits, in an outgoing call management process requested by the wireless terminal, transmission to the corresponding base station that is being congested, and
a setting unit that sets the corresponding base station that is being congested to be included in a calling base station associated with the wireless terminal.

3. The wireless communication system according to claim 2, wherein the base station further includes a registration unit that performs a registration process, in a predetermined order, on the wireless terminal that has sent the location registration request when the determination unit determines that the base station is in the congestion state.

4. A wireless communication method comprising:
a step of determining, performed by a base station, that the base station is in a congestion state when the number of wireless terminals each having sent a location registration request that is received by the base station within a predetermined period of time exceeds a predetermined number;
a step of transmitting, performed by the base station, a congestion occurrence notification to the wireless terminal and a management device when it is determined by the base station that the base station is in the congestion state; and
a step of stopping, performed by the wireless terminal, the location registration request when the wireless terminal receives the congestion occurrence notification, and setting, performed by the wireless terminal, a setting of the wireless terminal to be within service range that is available for outgoing and incoming calls.

5. A program that causes a computer to execute a process comprising:
a step of determining, performed by a base station, that the base station is in a congestion state when the number of wireless terminals each having sent a location registration request that is received by the base station within a predetermined period of time exceeds a predetermined number;
a step of transmitting, performed by the base station, a congestion occurrence notification to the wireless terminal and a management device when it is determined by the base station that the base station is in the congestion state; and
a step of stopping, performed by the wireless terminal, the location registration request when the wireless terminal receives the congestion occurrence notification, and setting, performed by the wireless terminal, a setting of the wireless terminal to be within service range that is available for outgoing and incoming calls.
